# DEMANDE DE BREVET EUROPEEN

(11) **EP 4 036 623 A1**
(43) Date de publication de la demande: **03.08.2022**
(21) Numéro de dépôt: 22154651.8
(22) Date de dépôt: 01.02.2022
(51) Int. Cl.: G02B 6/44, H05K 7/14, H05K 7/18, G02B 6/48

(54) **DISPOSITIF DE FIXATION D'UN BOÎTIER SUR UN SUPPORT**

(30) Priorité: 02.02.2021 FR 2100972
(71) Demandeur: Preformed Line Products (France), 78200 Buchelay (FR)
(72) Inventeur: WILKINSON, Nicholas, Andover, SP10 3BP (GB); VIDAL, William, 78200 Mantes la Jolie (FR)
(74) Mandataire: Plasseraud IP

(57) **Abrégé**

Un dispositif (18) de fixation d'un boîtier (14), en particulier d'un boîtier de raccordement de câbles à fibres optiques, sur un support (16), comporte un montant (20) avec un premier moyen (44) de fixation d'une première bride (46) de fixation du boîtier (14) en une position fixe par rapport au montant (20), et au moins un support (54) mobile le long du montant (20), présentant un deuxième moyen (45) de fixation d'une deuxième bride (47) de fixation du boîtier (14).

## Description

### Domaine technique

La présente divulgation relève du domaine des dispositif de fixation d'un boîtier sur un support, notamment d'un boîtier de raccordement de câbles à fibres optiques, du type mis en œuvre notamment dans la réalisation de lignes aériennes de transfert de données.

La présente invention est également relative à une ligne aérienne de transfert de signaux comprenant un tel dispositif de fixation.

### Technique antérieure

Il est connu dans le domaine des lignes aériennes de transfert de signaux, de mettre en œuvre des boîtiers de raccordement de câbles à fibres optiques. De tels boîtiers sont classiquement fixé sur un pylône au moyen d'un dispositif de fixation.

Cependant, il existe sur le marché différents modèles de tels boîtiers de raccordements, présentant notamment des hauteurs différentes d'un modèle à l'autre. Dans ces conditions, un dispositif de fixation est généralement associé à un unique boîtier de raccordement et réciproquement.

Il existe donc un besoin pour un dispositif de fixation permettant de fixer différents modèles de boîtiers de raccordement sur un pylône qui soit en outre simple à mettre en œuvre.

### Résumé

La présente divulgation vient améliorer la situation.

À cette fin, il est décrit un dispositif de fixation d'un boîtier, en particulier d'un boîtier de raccordement de câbles à fibres optiques, sur un support, le dispositif de fixation comportant un montant avec un premier moyen de fixation d'une première bride de fixation du boîtier en une position fixe par rapport au montant, et au moins un support mobile le long du montant, présentant un deuxième moyen de fixation d'une deuxième bride de fixation du boîtier.

Selon des modes de réalisation préféré, le dispositif de fixation décrit comporte une ou plusieurs des caractéristiques suivantes, prises seules ou en combinaison :
- le premier moyen de fixation comporte un trou taraudé de réception d'une vis de fixation de la première bride de fixation du boîtier ;
- le trou taraudé est réalisé au niveau d'un premier relief saillant du montant ;
- le premier moyen de fixation comporte en outre une première cale, la première bride de fixation étant enserrée entre le premier relief saillant et la première cale ;

- le support mobile comporte un logement de section complémentaire à la section du montant, adapté à recevoir une partie au moins du montant, pour guider le déplacement du support mobile par rapport au montant ;
- le support mobile est fixé sur le montant au moyen d'une vis enserrant le montant dans le logement du support mobile ;
- le deuxième moyen de fixation comporte un trou taraudé de réception d'une vis de fixation de la deuxième bride, réalisé sur le support mobile ;
- le trou taraudé est réalisé au niveau d'un deuxième relief saillant, le deuxième relief saillant étant de préférence sensiblement identique au premier relief saillant, le cas échéant ;
- le deuxième moyen de fixation comporte en outre une deuxième cale, la deuxième bride de fixation du boîtier étant enserrée entre le deuxième relief saillant et la deuxième cale ;
- le dispositif de fixation d'un boîtier comprend au moins un, de préférence au moins deux, support de fixation du dispositif de fixation sur un support, le au moins un support étant conformé pour maintenir le montant à distance du support ;
- le au moins un support de fixation est conformé pour fixer le dispositif de fixation sur un support, notamment un pylône, au moyen d'un feuillard ;
- chaque support de fixation est fixé sur le montant au moyen d'une vis et d'un écrou, le support comprenant de préférence un moyen de limiter voire d'empêcher la rotation de l'écrou ;
- le montant est de longueur réglable, le montant étant de préférence formé par un premier corps tubulaire creux recevant au moins un premier bras adapté à être reçu coulissant dans le premier corps tubulaire creux ;
- les extrémités du montant sont repliées ;
- le dispositif de fixation d'un boîtier comporte en outre une traverse, solidaire du montant ;
- la traverse est de longueur réglable, la traverse étant de préférence formée par un deuxième corps tubulaire creux recevant au moins un deuxième bras adapté à être reçu coulissant dans le deuxième corps tubulaire creux ; et
- les extrémités de la traverse sont repliées.

Selon un autre aspect, il est décrit un ensemble d'un boîtier, en particulier d'un boîtier de raccordement de câbles à fibres optiques, et d'un dispositif de fixation tel que décrit ci-avant, dans toutes ses combinaisons, le boîtier étant fixé au montant par l'intermédiaire des brides.

Selon encore un autre aspect, il est décrit une ligne aérienne de transfert de signaux comprenant au moins un câble de transfert de signaux, comprenant au moins une fibre optique, un boîtier de raccordement de câbles de fibres optiques, un support, et un dispositif de fixation d'un boîtier tel que décrit ci-avant, dans toutes ses combinaisons, fixé au support, le câble étant solidaire du boîtier de raccordement, le boîtier de raccordement étant fixé au support au moyen du dispositif de fixation.

### Brève description des dessins

D'autres caractéristiques, détails et avantages apparaîtront à la lecture de la description détaillée ci-après, et à l'analyse des dessins annexés, sur lesquels :
La figure 1 représente schématiquement un détail d'un exemple de ligne de transfert de signaux.
La figure 2 représente schématiquement en perspective un exemple de dispositif de fixation pouvant être mis en œuvre dans le détail de ligne de transfert de signaux de la figure 1.
La figure 3 représente schématiquement en perspective un exemple de support de fixation du dispositif de fixation de la figure 2, sur un pylône.
La figure 4 représente schématiquement en perspective un détail du dispositif de fixation de la figure 2.
La figure 5 représente schématiquement en perspective l'association d'un support mobile et d'une bride de fixation pouvant être mis en œuvre dans le dispositif de fixation de la figure 2.
La figure 6 représente schématiquement selon une perspective différente, la même association d'un support mobile et d'une bride de fixation que la figure 5.
La figure 7 représente schématiquement vu de face, le dispositif de fixation de la figure 2 dans une première configuration.
La figure 8 représente schématiquement vu de face, le dispositif de fixation de la figure 2 dans une deuxième configuration.

### Description des modes de réalisation

Sur les différentes figures, les mêmes références désignent des éléments identiques ou similaires. À fin de concision, seuls les éléments qui sont utiles à la compréhension du mode de réalisation décrit sont représentés sur les figures et sont décrits de manière détaillée dans la suite.

Dans la description qui suit, lorsque l'on fait référence à des qualificatifs de position absolue, tels que les termes « avant », « arrière », « haut », « bas », « gauche », « droite », etc., ou relative, tels que les termes « dessus », « dessous », « supérieure », « inférieur », etc., ou à des qualificatifs d'orientation, tels que « horizontale », « vertical », etc., il est fait référence, sauf précision contraire, à l'orientation normale du dispositif sur un pylône ou à l'orientation sur les figures.

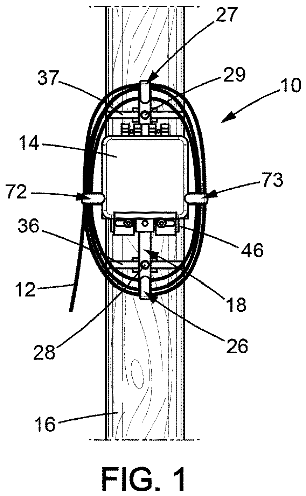

Il est maintenant fait référence à la figure 1. Cette figure 1 illustre schématiquement une portion d'une ligne **10** de transfert de signaux comprenant essentiellement un câble **12** de fibres optiques associé fonctionnellement à un boîtier de raccordement **14** fixé à un support **16,** en l'espèce un pylône **16,** au moyen d'un dispositif de fixation **18.** Un tel boîtier de raccordement **14,** bien connu de l'homme du métier, peut notamment permettre de dériver des fibres optiques vers un ou plusieurs immeubles d'habitations, et/ou d'éclater un câble de transport (dit « CTR ») vers un ou plusieurs câbles de distribution (dits « CDI »).

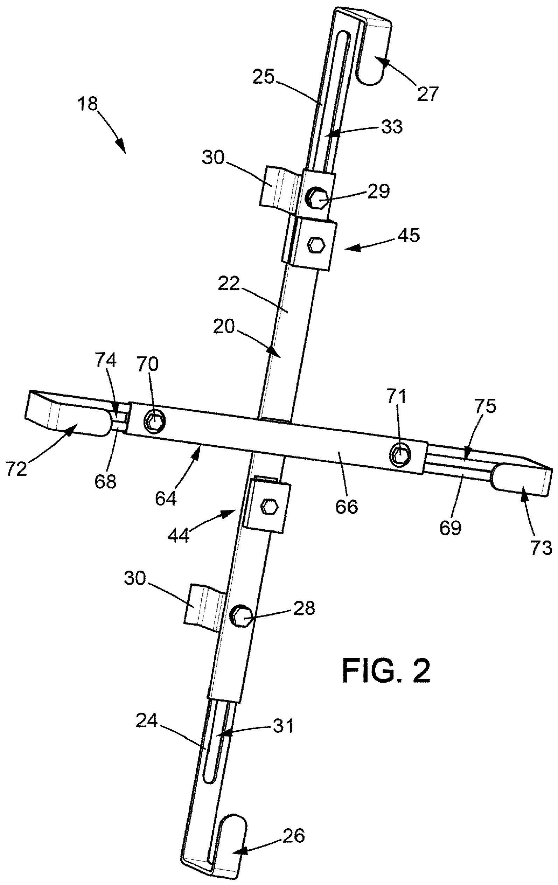

Dans la suite, on décrit plus en détail le dispositif de fixation **18,** permettant la fixation du boîtier de raccordement **14** sur le pylône **16,** en particulier en regard des figures 2 à 8.

Le dispositif de fixation **18** comporte tout d'abord un montant **20** s'étendant principalement selon une direction longitudinale. Le montant **20** est ici constitué d'un corps principal **22,** tubulaire, recevant deux bras **24, 25** coulissant par rapport au corps principal **22.** Chaque bras **24, 25** s'étend librement depuis une extrémité longitudinale du corps tubulaire **22.** Chaque bras **24, 25** présente une extrémité libre **26, 27** respective, repliée, ici en « U ». Le déplacement de chaque bras **24, 25** par rapport au corps principal **22** peut être arrêté au moyen d'une vis **28, 29** respective, reçue dans un logement associé formé sur le bras **24, 25.** Ici, chaque bras **26, 27** présente un trou **31, 33** oblong orienté selon la direction longitudinale du bras **24, 25.** Ainsi, par réception d'une vis **28, 29** dans le trou oblong **31, 33** associé, on fixe la position longitudinale de bras **24, 25** par rapport au corps principal **22** du montant **20.** En d'autres termes, on fixe ainsi la longueur de chaque bras **24, 25** s'étendant à l'extérieur du corps principal **22** du montant **20.** Ici, les trous **31, 33** étant oblongs, il est a priori possible de régler la longueur du bras **24, 25** à tout valeur comprise entre deux extrema correspondant au cas où la vis **28, 29** est en butée contre une extrémité longitudinale du trou oblong **31, 33** dans lequel elle est reçue. Alternativement, chaque bras **24, 25** peut présenter un nombre fini de trous, notamment au moins deux trous ou exactement deux trous, chaque trou étant adapté à la réception d'une vis **28, 29** respective, les trous étant distants les uns des autres selon la direction longitudinale du bras 24, 25. Dans ce cas, la longueur des bras 24, 25 s'étendant hors du corps principal **22** du montant **20** peut être réglée à un nombre fini de valeur correspondant au nombre de trou dans le bras **24, 25.**

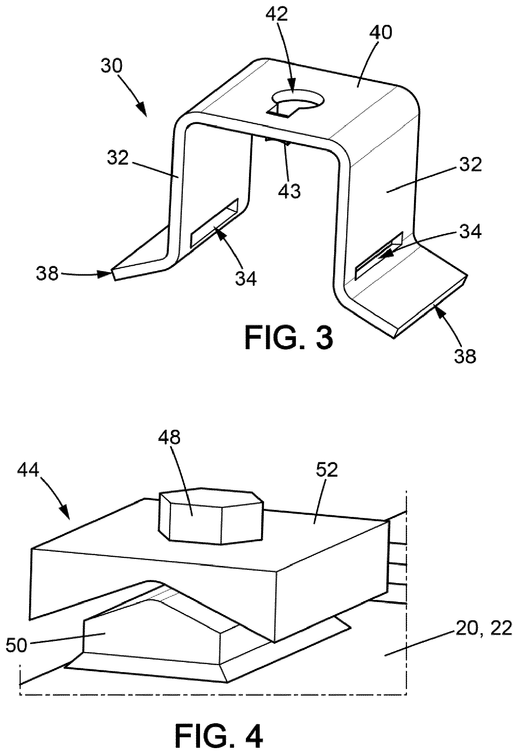

Ici, chaque vis **28, 29** permet en outre de fixer un support de fixation 30 au corps principal **22.** Un exemple de support de fixation **30** est illustré sur la figure 3. Comme représenté sur cette figure, chaque support de fixation **30** prend ici la forme d'un lame métallique pliée en « U ». Chaque branche **32** du « U » présente une ouverture **34** adaptée à permettre le passage d'un feuillard **36, 37** de fixation du dispositif de fixation **18** sur le pylône **16.** Avantageusement, au voisinage de leurs extrémités libres **38,** les branches **32** du « U » de chaque support de fixation **30** peuvent être courbées de manière sensiblement complémentaire à la convexité du pylône **16.** Ainsi, on accroit la stabilité du montage du dispositif de fixation **18** sur le pylône **16,** au moyen des feuillards **36, 37.**

L'âme du « U » de la lame métallique formant le support de fixation **30** est ici formé par une portion sensiblement plane **40,** présentant une ouverture traversante **42** sensiblement en son centre. L'ouverture **42** permet le passage de la vis **28, 29,** qui est immobilisée au moyen d'un écrou. Une portion angulaire périphérique de l'ouverture **42** est rabattue afin de former un ergot **43** limitant voire empêchant la rotation de l'écrou vissé sur la vis **28, 29.**

La mise en œuvre de supports de fixation **30** permet de maintenir le dispositif de fixation **18,** notamment le corps principal **22** écarté du support **16** sur lequel il est fixé. On limite ainsi, voire on évite, toute interférence des vis **28, 29** et des écrous vissés sur ces vis **28, 29** avec le support **16.** Le dispositif de fixation **18** est ainsi plus stable. Ceci peut également faciliter les manipulations de l'utilisateur permettant de fixer le boîtier de raccordement **14** sur le dispositif de fixation **18,** lorsque ce dernier est déjà fixé sur le support **16.**

Le montant **20** présente par ailleurs un premier moyen **44** de fixation d'une première bride **46** de fixation du boîtier **14** (visible sur les figures 1, 7 et 8, notamment) par rapport au montant **20,** en une position fixe par rapport au montant **20.** Ici, le premier moyen de fixation **44** ne permet ainsi la fixation de la première bride **46** qu'en une position unique par rapport au montant **20.** Ainsi, notamment, le premier moyen de fixation **44** ne permet pas de déplacer la première bride de fixation **46** en différentes positions relatives par rapport au montant **20,** le long de la direction longitudinale du montant **20.**

Le premier moyen de fixation **44** comporte essentiellement un trou taraudé de réception d'une vis **48** de fixation de la première bride **46** de fixation du boîtier **18.** Ici, le trou taraudé est réalisé au niveau d'un premier relief saillant **50** du montant **20.** De manière remarquable, le premier relief saillant **50** est fixe par rapport au montant **20.** Ici, le premier relief saillant **50** est rapporté sur le montant **20.** Ainsi, le premier relief saillant **50** est par exemple soudé sur le montant **20.** Alternativement, le montant **20** peut former directement, c'est-à-dire de manière intégrale ou venue de matière, le premier relief saillant **50.**

Le premier relief saillant **50** est ici sensiblement cylindrique, en ce qu'il s'étend parallèlement à la direction longitudinale du montant **20,** en ayant une section extérieure sensiblement constante. La section extérieure du premier relief saillant **50** présente ici une base rectangulaire, orientée vers le montant **20,** surmontée d'un sommet triangulaire. D'autres formes du premier relief saillant **50** sont cependant possibles.

Le premier moyen de fixation **44** comporte en outre, selon l'exemple illustré une première cale **52.** La première cale **52** est adaptée pour que, une fois fixée sur le premier relief saillant **50** au moyen de la première vis **48** de fixation de la première bride **46,** la première bride **46** soit enserrée entre la première cale **52** et le premier relief saillant **50.** Ici, la première cale **52** présente une face orientée vers le premier relief saillant **50,** qui est concave, de concavité sensiblement complémentaire la convexité du premier relief saillant **50** orienté vers la première cale **52.** On améliore ainsi la stabilité de la fixation de la première bride **46** entre le premier relief saillant **50** et la première cale **52.** Ici, la face de la première cale **52** est concave en « V », de concavité sensiblement complémentaire la convexité du premier relief saillant **50,** en « V » orienté vers la première cale **52.** En outre, la première bride de fixation **46** présente une portion en « V » destinée à être enserrée entre le premier relief saillant **50** et la première cale **52.**

Le dispositif de fixation **18** comporte également, selon l'exemple illustré, un deuxième moyen **45** de fixation d'une deuxième bride **47** de fixation du boîtier **18.** Le deuxième moyen de fixation **45** est ici mobile, en ce qu'il permet la fixation de la deuxième bride **47** en différentes positions, le long de la direction longitudinale du montant **20,** notamment du corps principal **22** du montant **20.**

Comme le premier moyen de fixation **44,** le deuxième moyen de fixation **45** comporte essentiellement un trou taraudé de réception d'une vis **49** de fixation de la deuxième bride **47** de fixation du boîtier **18.** Ici, le trou taraudé est réalisé au niveau d'un deuxième relief saillant **51.** De manière remarquable, le deuxième relief saillant **51** est ici réalisé sur un support **54** mobile par rapport au montant **20** et, en particulier, ici, par rapport au corps principal **22** du montant **20.** Ici, le deuxième relief saillant **51** est intégral avec le support mobile **54.** Alternativement, le deuxième relief saillant **51** peut être rapporté sur le support mobile **54.**

Le deuxième relief saillant **51** est ici identique au premier relief saillant **50,** notamment en ce qui concerne la forme. Ainsi, le deuxième relief saillant **51** tel qu'illustré est sensiblement cylindrique, en ce qu'il s'étend parallèlement à la direction longitudinale du montant **20,** en ayant une section extérieure sensiblement constante. La section extérieure du deuxième relief saillant **51** présente ici une base rectangulaire, orientée vers le montant **20,** surmontée d'un sommet triangulaire. D'autres formes du deuxième relief saillant **51** sont cependant possibles. De préférence toutefois, le deuxième relief saillant 51 est identique au premier relief saillant **50.** Ceci peut en effet permettre de mettre en œuvre des première et deuxième brides **46, 47** similaires, voire identiques.

Le support mobile **54** a une forme sensiblement cylindrique creuse, de section interne complémentaire à la section externe du montant **20,** notamment du corps principal **22** du montant **20.** Ainsi, le support mobile **54** peut coulisser le long du montant **20,** en particulier le long du corps principal **22** du montant **20.** Le support mobile **54** peut être immobilisé par rapport au montant **20,** notamment par rapport au corps principal **22** du montant **20** au moyen d'une vis de blocage **56.**

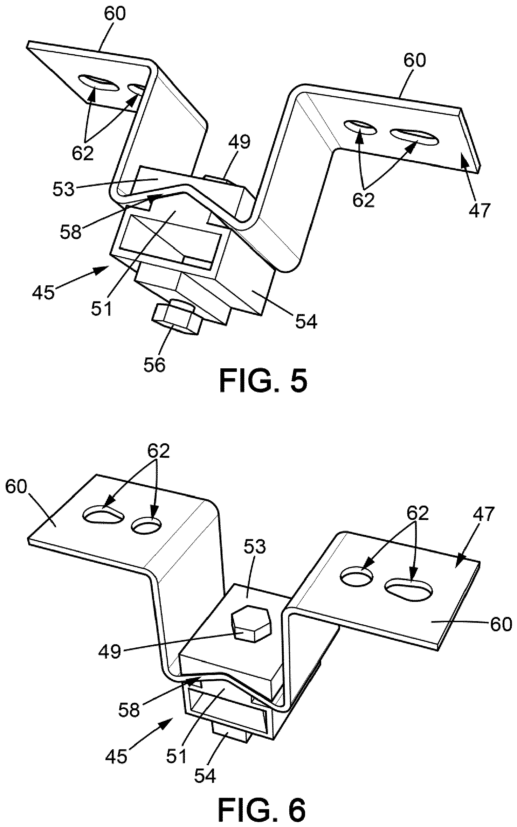

Le deuxième moyen de fixation **45** comporte en outre, selon l'exemple illustré aux figures 5 et 6, une deuxième cale **53.** La deuxième cale **53** est adaptée pour que, une fois fixée sur le deuxième relief saillant **51** au moyen de la deuxième vis **49** de fixation de la deuxième bride **47,** la deuxième bride **47** soit enserrée entre la deuxième cale **53** et le deuxième relief saillant **51.** Ici, la face de la deuxième cale **53** est concave, de concavité sensiblement complémentaire la convexité du deuxième relief saillant **51** orienté vers la deuxième cale **53.** On améliore ainsi la stabilité de la deuxième bride **47** fixée entre le deuxième relief saillant **51** et la deuxième cale **53.** Ici, la deuxième cale **53** présente une face orientée vers le deuxième relief saillant **51,** qui est concave en « V », de concavité sensiblement complémentaire la convexité du deuxième relief saillant **51,** en « V » orienté vers la deuxième cale **53.** En outre, la deuxième bride de fixation **47** présente une portion **58** en « V », destinée à être enserrée entre le deuxième relief saillant **51** et la deuxième cale **53.**

Comme visible sur les figures 5 et 6, la deuxième bride **47** prend ici la forme d'une lame métallique pliée sensiblement en « U », dont l'âme est formée par la portion en « V » **58,** destinée à être enserrée entre le deuxième relief saillant **51** et la deuxième cale **53.**

La deuxième bride **47** comporte par ailleurs deux pattes **60**, extrémales. Chaque patte **60** présente au moins une ouverture traversante **62**, ici deux ouvertures traversantes **62,** permettant la fixation du boitier **14** sur la deuxième bride **47**, au moyen d'une vis ou d'un boulon, par exemple.

Il est à noter que la première bride de fixation **46** est ici identique à la deuxième bride de fixation **47.** En pratique, les première et deuxième brides **46, 47** sont adaptées à la position de moyens de fixation sur le boîtier **14,** notamment à la position et au diamètre de trous de fixation par des vis ou des boulons.

Enfin, comme visible sur la figure 2 en particulier, le dispositif de fixation **18** comporte également une traverse **64,** solidaire du montant **20.** La traverse **64** est par exemple soudée au montant **20,** en particulier au corps principal **22** du montant **20.**

La traverse **64** est ici de longueur réglable. Pour ce faire, la traverse **64** comporte un corps principal de traverse **66,** creux, recevant deux bras **68, 69.** Les deux bras **68, 69** peuvent coulisser à l'intérieur du corps principal de traverse **66.** Le mouvement des bras **68, 69** par rapport au corps principal de traverse **66** peut être bloqué au moyen d'une vis **70, 71** ou d'un boulon respectif/ve, reçu/e dans un logement associé formé sur les bras **68, 69.** Ici, chaque bras **68, 69** présente un trou **74, 75** oblong orienté selon la direction longitudinale des bras **68, 69** formant chacun un tel logement. Ainsi, par réception d'une vis **70, 71** dans le trou oblong **74, 75** associé, on fixe la position longitudinale des bras **68, 69** par rapport au corps principal de traverse **66.** En d'autres termes, on fixe ainsi la longueur de chaque bras **68, 69** s'étendant à l'extérieur du corps principal de traverse **66.** Ici, les trous **74, 75** étant oblongs, il est a priori possible de régler la longueur des bras **68, 69** à toute valeur comprise entre deux extrema correspondant aux cas où chaque vis **74, 75** est en butée contre une extrémité longitudinale du trou oblong **74, 75** dans lequel elle est reçue. Alternativement, chaque bras **74, 75** peut présenter un nombre fini de trous distincts, notamment au moins deux trous ou exactement deux trous, chaque trou étant adapté à la réception d'une vis **70, 71** respective, les trous étant distants les uns des autres selon la direction longitudinale du bras **74, 75.** Dans ce cas, la longueur des bras **74, 75** s'étendant hors du corps principal de traverse **66** peut être réglée à un nombre fini de valeur, correspondant au nombre de trou dans le bras **68, 69.**

Enfin, les extrémités **72, 73** des bras **68, 69** de la traverse **64** sont repliés, ici en « U ».

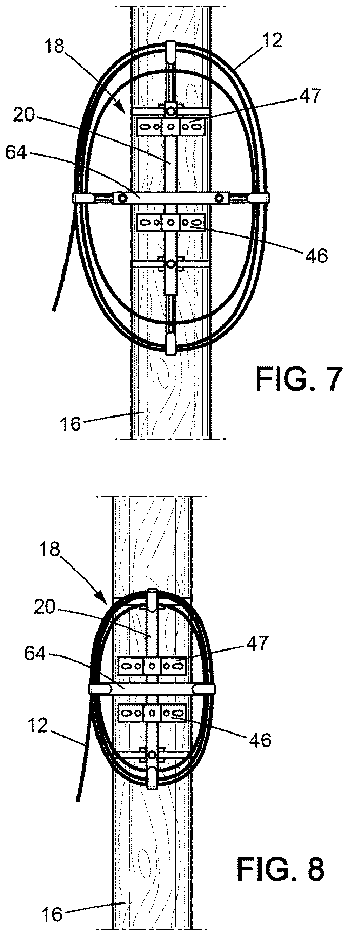

Comme cela est plus particulièrement visible sur les figures 7 et 8, le dispositif de fixation **18** permet, en déplaçant le deuxième moyen de fixation **45** par rapport au montant **20** de modifier la distance entre les deux brides de fixation **46, 47** du boitier de raccordement **14.** Il est ainsi possible de monter différents types de boîtier de raccordement sur un support **16,** au moyen d'un même type de dispositif de fixation **18.**

Il est à noter qu'ici seul le deuxième moyen de fixation **45** est mobile. En effet, un seul moyen de fixation mobile apparait suffisant pour obtenir une plage satisfaisante de hauteurs de boitiers de raccordement pouvant être fixés à un support **16** au moyen du dispositif de fixation **18.** En outre, le fait qu'un seul moyen de fixation soit mobile facilite le montage du boitier de raccordement **14** sur le dispositif de fixation. Par exemple, le boîter de raccordement peut être fixé dans un premier temps, uniquement à la première bride **46.** L'opérateur peut alors déplacer le deuxième moyen de fixation **45,** mobile, pour le placer de manière adaptée à la fixation du boîtier **14.** L'opérateur fixe alors le deuxième moyen de fixation **45,** mobile, avant de fixer le boîtier de raccordement **14** sur le deuxième moyen de fixation **45,** via une deuxième bride **47.**

Ces opérations peuvent être réalisées alors que le dispositif de fixation **18** est déjà fixé au support **16** ou avant que le dispositif de fixation **18** ne soit fixé au support **16.** Dans le cas où le dispositif de fixation **18** est déjà fixé sur le support **16,** il est intéressant de noter que les supports de fixation **30** maintiennent le montant **20** à distance du support **16,** facilitant ainsi les manipulations de l'utilisateur nécessaires à la fixation du boîtier **14.**

Par ailleurs, comme l'illustrent les figures 7 et 8, en jouant sur la longueur du montant 20 et/ou de la traverse 64, il est possible d'enrouler (ou « lover ») une longueur de câble 12 plus ou moins grande entre les extrémités repliées 26, 27, 72, 73 du montant 20 et de la traverse 64, en limitant le nombre de boucles de câble ainsi formées. La longueur du montant 20 et/ou de la traverse 64 peut également être déterminer en fonction du diamètre du câble de fibres optiques lové. En effet, le câble de fibres optiques peut présenter un rayon de courbure acceptable - c'est-à-dire sans conséquence sur le transfert d'information par les fibres optiques et/ou sans risque d'endommager les fibres optiques - qui est fonction de ce diamètre du câble de fibres optiques.

L'invention n'est pas limitée aux seuls exemples indiqués ci-avant. Au contraire, l'invention est susceptible de nombreuses variantes accessibles à l'homme de l'art.

Notamment, le dispositif de fixation **18** peut être fixé sur le support **16** au moyen de vis ou de boulons. Dans ce cas en particulier, les supports de fixation **30** peuvent présenter des ouvertures adaptées à une telle fixation par vis ou boulons. Ceci est en particulier le cas lorsque le support est un mur ou un pylône à section en « I » ou en « H ».

## Revendications

1. Dispositif (18) de fixation d'un boîtier (14), en particulier d'un boîtier de raccordement de câbles à fibres optiques, sur un support (16), le dispositif de fixation (18) comportant un montant (20) avec un premier moyen (44) de fixation d'une première bride (46) de fixation du boîtier (14) en une position fixe par rapport au montant (20), et au moins un support (54) mobile le long du montant (20), présentant un deuxième moyen (45) de fixation d'une deuxième bride (47) de fixation du boîtier (14).

2. Dispositif de fixation d'un boîtier selon la revendication 1, dans lequel le premier moyen de fixation (44) comporte un trou taraudé de réception d'une vis (48) de fixation de la première bride (46) de fixation du boîtier (14).

3. Dispositif de fixation d'un boîtier selon la revendication 2, dans lequel le trou taraudé est réalisé au niveau d'un premier relief saillant (50) du montant (20).

4. Dispositif de fixation d'un boîtier selon la revendication 3, dans lequel le premier moyen de fixation (44) comporte en outre une première cale (52), la première bride de fixation (46) étant enserrée entre le premier relief saillant (50) et la première cale (52).

5. Dispositif de fixation d'un boîtier selon l'une quelconque des revendications 1 à 4, dans lequel le support mobile (54) comporte un logement de section complémentaire à la section du montant (20), adapté à recevoir une partie au moins du montant (20), pour guider le déplacement du support mobile (54) par rapport au montant (20).

6. Dispositif de fixation d'un boîtier selon la revendication 5, dans lequel le support mobile (54) est fixé sur le montant (20) au moyen d'une vis (56) enserrant le montant (20) dans le logement du support mobile (54).

7. Dispositif de fixation d'un boîtier selon l'une quelconque des revendications précédentes, dans lequel le deuxième moyen de fixation (45) comporte un trou taraudé de réception d'une vis de fixation (49) de la deuxième bride (47), réalisé sur le support mobile (54).

8. Dispositif de fixation d'un boîtier selon la revendication 7, dans lequel le trou taraudé est réalisé au niveau d'un deuxième relief saillant (51), le deuxième relief saillant (51) étant de préférence sensiblement identique au premier relief saillant (50), le cas échéant.

9. Dispositif de fixation d'un boîtier selon la revendication 8, dans lequel le deuxième moyen de fixation (45) comporte en outre une deuxième cale (53), la deuxième bride (47) de fixation du boîtier (14) étant enserrée entre le deuxième relief saillant (51) et la deuxième cale (53).

10. Dispositif de fixation d'un boîtier selon l'une quelconque des revendications précédentes, comprenant au moins un, de préférence au moins deux, support (30) de fixation du dispositif de fixation (18) sur un support (16), le au moins un support (30) étant conformé pour maintenir le montant (20) à distance du support (16).

11. Dispositif de fixation d'un boîtier selon la revendication 10, dans lequel le au moins un support (30) de fixation est conformé pour fixer le dispositif de fixation (18) sur un support (16), notamment un pylône (16), au moyen d'un feuillard (36, 37).

12. Dispositif de fixation d'un boîtier selon la revendication 10 ou 11, dans lequel chaque support (30) de fixation est fixé sur le montant (20) au moyen d'une vis et d'un écrou, le support (30) comprenant de préférence un moyen (43) de limiter voire d'empêcher la rotation de l'écrou.

13. Ensemble d'un boîtier (14), en particulier d'un boîtier de raccordement de câbles à fibres optiques, et d'un dispositif de fixation (18) selon l'une quelconque des revendications précédentes, le boîtier (14) étant fixé au montant (20) par l'intermédiaire des brides (46, 47).

14. Ligne aérienne (10) de transfert de signaux comprenant au moins un câble de transfert de signaux (12), comprenant au moins une fibre optique, un boîtier (14) de raccordement de câbles de fibres optiques, un support (16), et un dispositif de fixation (18) d'un boîtier selon l'une quelconque des revendications 1 à 12, fixé au support (16), le câble (12) étant solidaire du boîtier de raccordement (14), le boîtier de raccordement (14) étant fixé au support (16) au moyen du dispositif de fixation (18).
